# EUROPÄISCHE PATENTSCHRIFT

(11) **EP 1 561 373 B1**
(45) Veröffentlichungstag und Bekanntmachung des Hinweises auf die Patenterteilung: **15.02.2006**
(21) Anmeldenummer: 05001613.8
(22) Anmeldetag: 27.01.2005
(51) Int. Cl.: A01D 43/063

(54) **Rasenmäher**
Lawn mower
Tondeuse à gazon

(30) Priorität: 03.02.2004 DE 102004005236
(43) Veröffentlichungstag der Anmeldung: 10.08.2005
(73) Patentinhaber: Kress, Werner, D-89077 Ulm (DE)
(72) Erfinder: Kress, Werner, D-89077 Ulm (DE)
(74) Vertreter: Sawodny, Michael-Wolfgang

(56) Entgegenhaltungen:
- EP-A- 1 304 027
- EP-A- 1 386 530

## Beschreibung

Die Erfindung betrifft einen Rasenmäher mit Motorantrieb. Dabei kommen als Motor ein Benzinmotor oder ein Elektromotor in Betracht.

Ein solcher Rasenmäher weist eine Schneideinrichtung auf. Die Schneideinrichtung besteht vorzugsweise aus einem langgestreckten Messerblatt, das in der Mitte seiner Länge um eine vertikale Achse drehbar gelagert ist. Das Messerblatt ist an seinen beiden Längenabschnitten beidseits der genannten Drehachse jeweils mit einer Schneide versehen, der eine Längenabschnitt auf der einen Schmalkante, und der andere Längenabschnitt auf der gegenüberliegenden Schmalkante. Das Messerblatt ist in vielen Fällen im wesentlichen horizontal angeordnet. Es kann auch eine gewisse Neigung gegen die Horizontalebene aufweisen, so dass die Schneideinrichtung nicht nur ihre Schneid- (oder Abschlag) Funktion erfüllt, sondern auch eine Förderfunktion. Hierdurch wird ein Luftstrom erzeugt, der das abgeschlagene Gras in eine bestimmte Richtung fördert.

Motor und Schneideinrichtung sind von einem Gehäuse umschlossen. Das Gehäuse kann von einem Fahrgestell getragen sein oder selbst Räder aufweisen, die auf dem Rasen abrollen. Am Gehäuse ist ein Holm befestigt, mit dem der Rasenmäher manipuliert wird. Die Bedienungsperson greift dabei am Holm an, um den Rasenmäher über den Rasen hinweg zu führen und somit dessen Bewegungsbahn zu steuern. Außerdem bringt die Bedienungsperson über den Holm die Schubkraft zum Verfahren des Rasenmähers auf. Es gibt aber auch Rasenmäher, bei denen die genannten Räder einen Antrieb aufweisen, so dass die Bedienungsperson mittels des Holms lediglich noch die Steuerung auszuführen braucht.

Das Gehäuse weist einen Auslass auf, durch welchen der grasführende Luftstrom austritt. Der Luftstrom kann dabei an einer Seite des Rasenmähers austreten - das heißt seitlich der Bewegungsbahn, die der Rasenmäher ausführt. In neuerer Zeit sind aber Rasenmäher im Allgemeinen mit Grasfangbehältem ausgestattet. Ein solcher Grasfangbehälter hat eine Öffnung, die dem genannten Auslass des Gehäuses entspricht, und die an das Gehäuse über den Gehäuseauslass angeschlossen ist. Der Grasfangbehälter befindet sich meist im hinteren Bereich des Gehäuses.

Der Grasfangbehälter kann einen Sack aus Gewebe oder anderen schlaffen Materialien aufweisen. Er kann aber auch aus einer Box mit starren Wänden bestehen. In jedem Falle ist die Wandung oder wenigstens ein Teil der Wandung des Grasfangbehälters luftdurchlässig. Handelt es sich um ein Gewebe, so ist dies von Natur aus porös. Handelt es sich um eine Box mit starren Wänden, so sind die Wände oder wenigstens einige der Wände perforiert. Bei Rasenmähern ohne Grasfangbehälter ist der Gehäuseauslass im Stand der Technik mit einer Klappe versehen, die um eine Schwenkachse schwenkbar gelagert ist. Der grasführende Luftstrom prallt im Betrieb bei Rasenmähern gemäß dem Stand der Technik gegen die Platte und öffnet diese, so dass der grasführende Luftstrom austreten kann.

Die Erfindung geht aus von einem Rasenmäher gemäß EP 1 304 027. Bei dem aus der EP 1304027 bekannten Rasenmäher befinden sich die Schneideinrichtung und der Motor in einem vorderen Teil, und ein Grasfangbehälter in einem anschließenden hinteren Teil des Rasenmähergehäuses. Der hintere Teil ist durch einen Deckel abdeckbar. Der Deckel lässt sich aufklappen, so dass sich der Grasfangbehälter zum Zwecke des Entleerens nach oben herausnehmen lässt.

Bei dem aus der EP 1304027 bekannten Rasenmäher ist der Grasfangbehälter von entsprechenden Wänden umschlossen, nämlich von einer Rückwand des Gehäuses, von Seitenwänden sowie von einer den gesamten Innenraum des Gehäuses unterteilenden, annähernd vertikalen Zwischenwand. Der Grasfangbehälter beim Rasenmäher gemäß der EP 1304027 befindet sich somit in einer Art Schacht.

Die genannten Wände führen den Grasfangbehälter nach dessen Herausnehmen nach oben. Dabei kann sich der Grasfangbehälter verkanten. Auch kann seine Oberkante am Deckel anstoßen, wenn der Deckel nicht völlig aufgeklappt ist und senkrecht nach oben weist. Deshalb muss die Bedienungsperson den Deckel in der genannten völlig geöffneten Position halten. Um ein Verkanten zu vermeiden, könnte man die lichte Weite des genannten Schachtes überdimensionieren. Dies bedeutet jedoch eine Raumverschwendung und damit eine unerwünschte Vergrößerung der Außenabmessungen des Rasenmähers. Ein weiterer Nachteil des aus der EP 1304027 bekannten Mähers war, dass die Bedienperson zum Prüfen, ob der Grasfangbehälter noch Raum zur Aufnahme von abgeschlagenem Gras aufweist, den Deckel öffnen musste.

Der Erfindung liegt die Aufgabe, die Nachteile des Standes der Technik zu überwinden, insbesondere, einen Rasenmäher der genannten Bauart derart zu gestalten, dass der Grasfangbehälter ein relativ großes Volumen aufweisen kann, dass er im Betriebszustand einwandfrei positioniert und fixiert ist, ohne dass es weiterer Vorkehrungen bedarf, und dass er sich zum Zwecke des Entleerens leicht und ohne Verkanten oder Anstoßen oder sonstige Behinderung leicht herausheben lässt.

Diese Aufgabe wird durch die Merkmale von Anspruch 1 gelöst.

Dem gemäß umfasst das Rasenmähergehäuse zwei Bauteile, nämlich ein feststehendes Hauptteil sowie eine bewegliche Klappe, die am Hauptteil angelenkt ist und nach oben und nach hinten aufgeklappt werden kann. Die Schwenkachse befindet sich wenigstens annähernd im Bereich des Bodens des Rasenmähergehäuses oder etwas darüber, jedenfalls an der unteren Kante des aus der Klappe gebildeten Rückwandteiles. Die Vorderkante des Oberwandteiles der Klappe kann sich sehr weit nach vorn erstrecken, beispielsweise bis in den Bereich der halben Länge des Rasenmähergehäuses, in Draufsicht gesehen.

Im Betriebszustand ist der Rasenmäher vom Gehäuse völlig umschlossen, und dabei zu einem wesentlichen Teil von der genannten Klappe. Die Innenfläche des Rückwandteiles der Klappe kann dabei als Anlagefläche für die Rückwand des Grasfangbehälters dienen, so dass der Grasfangbehälter positiv im Rasenmähergehäuse fixiert ist. Wird die Klappe zum Zwecke des Herausnehmens des Grasfangbehälters nach oben und nach hinten aufgeklappt, so wird hierbei der Rückwandteil der Klappe nach hinten geneigt. Es wird hierdurch eine Öffnung freigegeben, die sich in Seitenansicht nach oben erweitert, so dass sich der Grasfangbehälter bequem nach oben herausnehmen lässt, ohne dass er an irgendeinem Element des Rasenmähergehäuses anstößt.

Auch braucht die Klappe nicht vom Benutzer in ihrem geöffneten Zustand gehalten zu werden. Aufgrund der Lage der Schwenkachse bleibt sie von allein in der geöffneten Lage.

In einer weitergebildeten Ausführungsform der Erfindung ist eine Füllstandsanzeige für den Grasfangbehälter vorgesehen. Vorteilhafterweise ist diese Füllstandsanzeige in die Oberwand des Gehäuses integriert und damit für die Bedienperson leicht einsehbar.

Bei der Füllstandsanzeige handelt es sich bevorzugt um eine Luftauslaßöffnung mit einer Füllstandsklappe. Ist der Grasfangkorb noch nicht vollständig gefüllt, so wird durch den Luftstrom die Füllstandsklappe gegen einen Anschlag gedrückt. Ist der Grasfangkorb vollständig gefüllt, so reicht der Druck des Luftstromes nicht aus, die Füllstandsklappe gegen den Anschlag zu drücken. Die nach unten gefallene Füllstandsklappe ist dann die Anzeige dafür, dass der Grasfangkorb gefüllt ist und geleert werden muß.

In einer weiteren vorteilhaften Ausführungsform ist vorgesehen, dass der Führungsholm des Rasenmähers verschwenkbar ausgebildet ist. Der Führungsholm kann so aus einer Arbeits- bzw. Betriebsstellung in eine Ruhestellung verbracht werden.

Vorteilhafterweise ist zur Fixierung des Führungsholmes in der Ruhestellung eine Arretiervorrichtung vorgesehen, die bevorzugt am Gehäuse angebracht ist.

Die Erfindung ist anhand der Zeichnung näher erläutert. Darin ist im Einzelnen folgendes dargestellt:
- Figur 1: zeigt einen Rasenmäher in perspektivischer Darstellung in Betriebsposition.
- Figur 2: zeigt denselben Rasenmäher unter einem anderen Blickwinkel.
- Figur 3: zeigt den Rasenmäher in verstauter Position, abgestellt auf die hintere Stirnwand des Gehäuses.
- Figur 3A: zeigt detailliert die Füllstandsanzeige für den Grasfangkorb
- Figur 4: zeigt den Rasenmäher in Seitenansicht, wiederum in Betriebsposition.
- Figur 5: zeigt den Rasenmäher bei aufgeklappter Gehäuseklappe und herausgehobenem Grasfangbehälter.

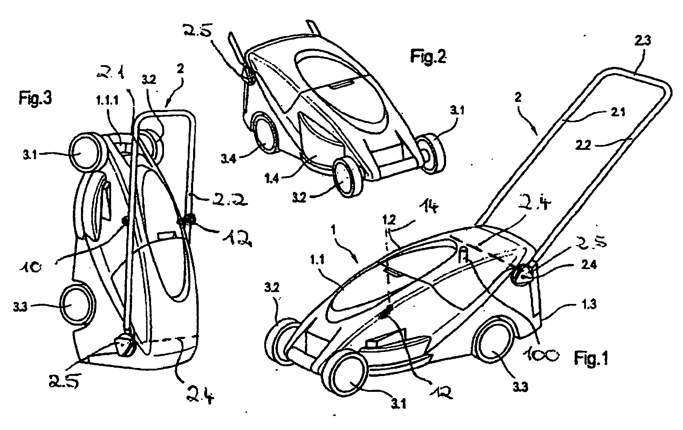

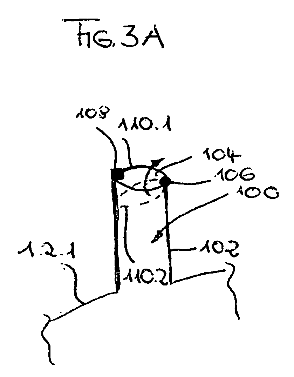

In den Figuren 1 bis 3 ist ein Ausführungsbeispiel eines erfindungsgemäßen Rasenmähers detailliert dargestellt. Wie man sieht, umfasst der in den Figuren 1 bis 3 dargestellte Rasenmäher ein Gehäuse 1, einen Führungsholm 2 sowie vier Räder 3.1, 3.2, 3.3 und 3.4.

Das Gehäuse umfasst ein Hauptteil 1.1 sowie eine Klappe 1.2. Klappe 1.2 ist an Hauptteil 1.1 angelenkt, und zwar entlang einer horizontalen Schwenkachse 1.3, die sich an der unteren hinteren Stirnseite des Gehäuses 1 befindet.

Führungsholm 2 umfasst zwei Schenkel 2.1 und 2.2 sowie einen Steg 2.3, der die beiden Schenkel miteinander verbindet. Die beiden Schenkel 2.1 und 2.2 sind an ihren unteren Enden an das Hauptteil 1.1 des Gehäuses 1 angelenkt. Der Führungsholm 2 ist in die Schwenkachse 2.4. verschwenkbar.

In Figur 2 befindet sich der Führungsholm 2 in der Arbeitsposition. Der Führungsholm 2 kann durch Verschwenken um die Verschwenkachse 2.4 bei gelösten Schrauben 2.5 in die in Figur 3 gezeigte Ruheposition verbracht werden.

Das Gehäuse umschließt - in der Zeichnung nicht dargestellt - eine Schneideinrichtung mit einem Messer, das um eine vertikale Achse umläuft, ferner einen Motor. Im vorliegenden Falle ist der Motor ein Elektromotor. Er ist oberhalb der Schneideinrichtung und koaxial zu dieser angeordnet. Man erkennt in den Figuren 1 bis 3 eine Ausbeulung 1.4 des Gehäuses 1. Hinter der Ausbeulung 1.4 verbirgt sich die Schneideinrichtung.

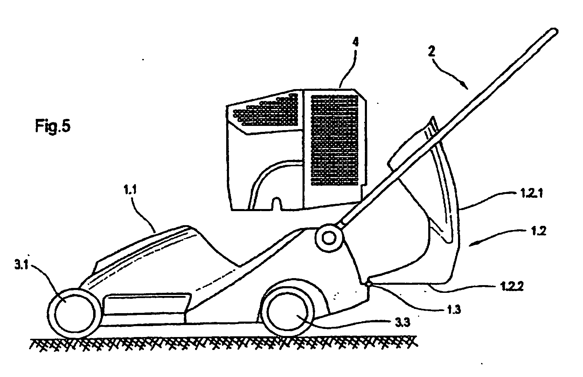

Der Grasfangbehälter befindet sich - in Fahrtrichtung des Rasenmähers gesehen - hinter dem Motor und der Schneideinrichtung, und zwar unter der Gehäuseklappe 1.2. Diesbezüglich wird auf Figur 5 verwiesen.

In Fig. 3 ist der Führungsholm 2 um die Schwenkachse 2.4 nach Lösen der Schrauben 2.5 in eine annähernd horizontale Position, verschwenkt worden. Dies ermöglicht, dass handgeführte Rasenbearbeitungsgerät hier den Rasenmäher auf die mindestens 2 Auflagerpunkte aufzustellen.

In vorliegendem Fall sind die mindestens zwei Auflagerpunkte, auf die das Rasenbearbeitungsgerät aufgestellt wird, eine Vielzahl von Auflagerpunkten, nämlich die Fläche der hinteren Stirnwand.

Wie man aus Figur 3 erkennt, benötigt der stehend verstaute Rasenmäher nur wenig Grundfläche, was bei beengten Raumverhältnissen, zum Beispiel in einer Garage, sehr vorteilhaft ist.

Um auch ein Zurückklappen des Führungsholmes 2 zu verhindern, ist in einer besonders vorteilhaften Ausführungsform vorgesehen, am Gehäuse 1 eine Arretiervorrichtung 12 vorzusehen. Ist der Führungsholm 2 nicht verschwenkt, so ist wie in Fig. 1 dargestellt, die Arretiervorrichtung 12 in eine erste Position verbracht. Ist der Führungsholm wie in Fig. 3 dargestellt umgeklappt und liegt am Anschlag 10 an, wird die Arretiervorrichtung 12 um die Achse 14 verschwenkt und übergreift den Führungsholm 2 im Bereich des Schenkels 2.2 und verhindert somit ein herunterklappen.
Wie zuvor beschrieben ist bei der gezeigten Ausführungsform der Rasenmäher derart gestaltet, dass er mit der hinteren Stirnwand auf den Boden gestellt werden kann. Die hintere Stirnwand ist im vorliegenden Falle aus der Gehäuseklappe 1.2 gebildet. Alternativ können wie zuvor beschrieben eine endliche Zahl von Auflagerpunkten der Gehäuseklappe 1.2 angeformt sein. Wie beschrieben ist der Führungsholm 2 ist um die Schwenkachse 2.4 hochgeklappt und liegt hierbei in einer senkrechten Ebene oder in einer Ebene, die um wenige Grad, beispielsweise bis zu 20 Grad, gegen die Vertikale geneigt ist. Neben den Auflagerpunkten oder der Stirnwand selbst, die dazu dienen kann, den Rasenmäher stehend aufzustellen, ist es auch möglich, dass in einer alternativen Ausführungsform an die hintere Stirnwand eine Auflagereinrichtung angeformt ist, beispielsweise eine Art "Stoßstange".

Um den Führungsholm 2 in stehender Position in der in Fig. 3 dargestellten Position zu halten, auch wenn die Schraube 2.5 gelöst ist, ist vorgesehen, am Gehäuse 1 einen Anschlag 10 anzuformen. Der Anschlag 10 verhindert ein weiteres Verschwenken des Holmes 2 zu den Rädern 3.1 hin.

Um auch ein Zurückklappen des Führungsholmes 2 zu verhindern, ist in einer besonders vorteilhaften Ausführungsform vorgesehen, am Gehäuse 1 eine Arretiervorrichtung 12 vorzusehen. Ist der Führungsholm 2 nicht verschwenkt, so ist wie in Fig. 1 dargestellt, die Arretiervorrichtung 12 in eine erste Position verbracht. Ist der Führungsholm wie in Fig. 3 dargestellt umgeklappt und liegt am Anschlag 10 an, wird die Arretiervorrichtung 12 um die Achse 14 verschwenkt und übergreift den Führungsholm 2 im Bereich des Schenkels 2.2 und verhindert somit ein Herunterklappen.

Wie man aus Figur 3 ferner sieht, ist dem Hauptteil 1.1 des Gehäuses 1 ein Durchgriff 1.1.1 angeformt, was das Handhaben beim Verstauen erleichtert.

Desweiteren in Figur 3 dargestellt ist die auf dem Oberwandteil 1.2.1. der Gehäuseklappe 1.2 angeordnete Füllstandsanzeige für den Grasfangbehälter, wobei der Grasfangbehälter in vorliegender Zeichnung wegen der geschlossenen Gehäuseklappe 1.2 nicht dargestellt ist. Betreffend den Grasfangbehälter wird auf Fig. 5 verwiesen.

Die Füllstandsanzeige 100 für den Grasfangbehälter 4 ist näher in Fig. 3A dargestellt.

Wie aus Fig. 3A hervorgeht, umfasst die Füllstandsanzeige als Luftauslaßöffnung eine in das Oberwandteil 1.2.1 der Gehäuseklappe 1.2 eingelassenes Rohr 102. Im Rohr selbst ist eine Füllstandsklappe 104 angeordnet. Die Füllstandsklappe 104 ist im Rohr schwenkbar um eine Schwenkachse 106 gelagert. Im Rohr selbst ist ein Anschlag 108 für die Füllstandsklappe 104 vorgesehen. Ist der Grasfangkorb 4 noch nicht vollständig gefüllt, so wird durch den Grasfangkorb 4 hindurchtretenden Luftstrom die Füllstandsklappe 104 in die Position 110.1 verbracht, um gegen den Anschlag 106 gedrückt. Ist der Grasfangkorb 4 vollständig gefüllt, so reicht der Druck des Luftstromes nicht mehr aus, die Füllstandsklappe 104 gegen den Anschlag 106 zu drücken. Dies führt dazu, dass die Füllstandsklappe 104 aufgrund der Gewichtskraft in die Position 110.2. wie in Fig. 3A dargestellt, zurückklappt. Die in die Fig. 3A dargestellte Position 110.2. ist dann eine Anzeige dafür, dass der Grasfangkorb gefüllt ist. Wenn die Bedienperson die nach unten gefallenen Klappe realisiert, so wird ohne dass die Gehäuseklappe 1.2 geöffnet werden muss, angezeigt, dass der Grasfangkorb vollständig gefüllt ist und gewechselt werden muss.

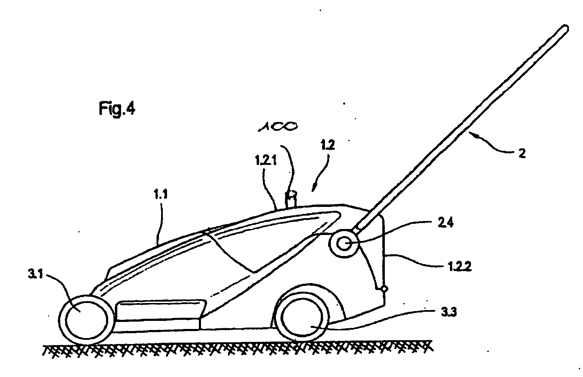

Die Figuren 4 und 5 zeigen den Rasenmäher in schematischer Ansicht von einer Seite her. Man erkennt hieraus genauer die Gestalt der Gehäuseklappe 1.2. Diese weist ein Oberwandteil 1.2.1 und ein Rückwandteil 1.2.2 auf. Die äußeren Begrenzungsflächen der beiden genannten Teile verlaufen wenigstens annähernd unter einem rechten Winkel zueinander. Gehäuseklappe 1.2 bildet auch jeweils einen Teil der beiden Gehäuse-Seitenwände. Aus Figur 5 erkennt man auch sehr gut die Schwenkachse 1.3, mittels welcher Gehäuseklappe 1.2 an Hauptteil 1.1 angelenkt ist. Wie man sieht, deckt die Gehäuseklappe 1.2 - in Draufsicht gesehen - den Grasfangbehälter 4 völlig ab. Der Grasfangbehälter 4 ist an seinen Seiten nur vom Gehäuse-Hauptteil 1.1 umschlossen.

In der in Figur 4 gezeigten Betriebsposition des Rasenmähers ist Grasfangkorb 4 in den Innenraum des Gehäuses 1 abgesenkt. Dies ist besonders vorteilhaft für das Verstauen des Rasenmähers auf einer der beiden Gehäuse-Stirnwänden - der hinteren oder der vorderen.

Besonders aufschlussreich ist Figur 5. Sie zeigt zusätzlich den Grasfangbehälter 4. Dieser lässt sich nach Umschwenken der Gehäuseklappe 1.2 leicht aus dem Hauptteil 1.1 des Gehäuses 1 nach oben herausheben, so wie dargestellt.

Wie man aus Figur 5 erkennt, ist es nicht notwendig, zum Herausheben des Grasfangbehälters 4 den Führungsholm 2 zu verschwenken. Dieser bleibt in seiner Betriebsposition.

Wie man besonders gut aus den Figuren 4 und 5 erkennt, hat die Gehäuseklappe 1.2 erhebliche Ausmaße, in Bezug auf das feststehende Gehäuse-Hauptteil 1.1. Die Gehäuseklappe 1.2 erstreckt sich im geschlossenen Zustand - Figur 4 - bis zur Mitte der gesamten Länge des gesamten Rasenmähers, oder sogar noch etwas darüber hinaus. Sie wird sich im Allgemeinen wenigstens bis zu einem Drittel der Länge erstrecken, von oben betrachtet.

Auch Rückwandteil 1.2.2 hat erhebliche Ausmaße. Es wird sich im Allgemeinen über zwei Drittel der gesamten hinteren Stirnwand erstrecken. Rückwandteil 1.2.2 kann die halbe Rückwand des Gehäuses 1 bilden, oder sogar die gesamte Rückwand. Im letzten Falle liegt die Schwenkachse 1.3 ganz unten, das heißt so nah wie möglich am Erdboden.

Die Seitenwände der Gehäuseklappe 1.2 werden im Allgemeinen wenigstens einen Teil der Seitenwände des Gehäuses bilden. Dies muss aber nicht so sein. Sie können auch nur einen minimalen Teil der Seitenwände des Gehäuses bilden, so dass der größte Teil der Seitenwände des Gehäuses 1 vom Gehäuse-Hauptteil 1.1 gebildet werden.

Die Gehäuseklappe 1.2 und das Gehäuse-Hauptteil 1.1 können derart gestaltet sein, dass das gesamte Gehäuse in geschlossenem Zustand der Klappe mehr oder minder hermetisch abgeschlossen ist. Dies lässt sich dadurch bewirken, dass an den umlaufenden Kanten, welche im geschlossenen Zustand an entsprechenden umlaufenden Kanten von Gehäuse-Hauptteil 1.1 anliegen, Dichtungen vorgesehen sind, oder dass die miteinander zusammenarbeitenden Kanten von Gehäuse-Hauptteil 1.1 und Gehäuseklappe 1.2 entsprechend gestaltet sind, so dass ein Eingriff zwischen den Kanten stattfindet. Hierdurch wird bewirkt, dass Grasstaub während des Mähens nicht nach außen dringt, was bei allergischen Benutzern vorteilhaft sein kann. Auch wird das Arbeitsgeräusch hierdurch verringert.

Grasfangbehälter 4 und die ihn im Betrieb tragenden Flächen können auch derart gestaltet sein, dass er mit seinem oberen Teil leicht nach hinten geneigt ist. Dies kann im Hinblick auf das Herausnehmen vorteilhaft sein. Auch ist es denkbar, dass die Gehäuseklappe 1.2 bei ihrem Aufschwenken in die in Figur 5 gezeigte Position den Grasfangbehälter 4 leicht in die genannte geneigte Position kippt.

## Patentansprüche

1. Rasenmäher;
mit einer um eine vertikale Achse umlaufenden Schneideinrichtung;
mit einem Motor;
mit einem Gehäuse (1)
mit einem Führungsholm (2), der am Gehäuse (1) angelenkt ist
mit einem Grasfangbehälter (4), der in das Gehäuse (1) integriert ist;
das Gehäuse (1) weist ein Hauptteil (1.1) und eine Klappe (1.2) auf, die mittels einer Schwenkachse (1.3) am Hauptteil (1.1) angelenkt und derart angeordnet ist, dass der Grasfangbehälter (4) im aufgeklappten Zustand
nach oben aus dem Gehäuse (1) herausnehmbar ist; **dadurch gekennzeichnet ist, dass**
die Klappe (1.2) einen Oberwandteil (1.2.1) umfasst, das einen wesentlichen Teil der Oberwand des Gehäuses (1) bildet sowie einen Rückwandteil (1.2.2), das einen wesentlichen Teil der Rückwand des Gehäuses (1) bildet;
die Schwenkachse (1.3) verläuft horizontal und befindet sich am unteren Ende des Rückwandteiles (1.2.2).

2. Rasenmäher nach Anspruch 1, **dadurch gekennzeichnet, dass**
das Gehäuse (1) den Motor und die Schneideinrichtung umschließt und in - Draufsicht - eine langgestreckte Form hat.

3. Rasenmäher nach einem der Ansprüche 1 bis 2, **dadurch gekennzeichnet, dass**
der Führungsholm zwei Schenkel sowie eine Steg umfasst.

4. Rasenmäher nach einem der Ansprüche 1 bis 3, **dadurch gekennzeichnet, dass** der Grasfangbehälter (4) - in Fahrtrichtung des Rasenmähers gesehen - hinter der Schneideinrichtung und dem Motor angeordnet ist.

5. Rasenmäher nach einem der Ansprüche 1 bis 4, **dadurch gekennzeichnet, dass** der Rasenmäher eine Füllstandsanzeigevorrichtung umfasst.

6. Rasenmäher nach Anspruch 5, **dadurch gekennzeichnet, dass** die Füllstandsanzeigevorrichtung am Oberwandteil (1.2.1) des Gehäuses angeordnet ist und eine Klappe (104) umfasst, die die Luftauslaßöffnung (102) bei ungefülltem Grasfangbehälter (4) verschließt und bei gefülltem Grasfangbehälter (4) öffnet.

7. Rasenmäher nach einem der Ansprüche 1 bis 6, **dadurch gekennzeichnet, dass** sich das Hauptteil über ein Drittel bis zur Hälfte der Länge des Gehäuses (1) erstreckt, in Draufsicht gesehen.

8. Rasenmäher nach einem der Ansprüche 1 bis 7, **dadurch gekennzeichnet, dass** das Gehäuse in Seitenansicht gesehen annähern keilförmig ist.

9. Rasenmäher nach einem der Ansprüche 1 bis 8, **dadurch gekennzeichnet, dass** der Hauptteil (1.1) und die Klappe (1.2) des Gehäuses (1) umlaufende Kanten aufweisen,die dichtend miteinander zusammenwirken.

## Claims

1. A lawnmower, comprising a cutting device revolving about a vertical axis, a motor, a housing (1), a guide bar (2) linked to the housing (1), a grass catcher (4) which is integrated in the housing (1), with the housing (1) comprising a main part (1.1) and a flap (1.2) which is linked by means of a swivel axle (1.3) t the main part (1.1) and is arranged in such a way that the grass catcher (4) can be removed upwardly from the housing (1) in the opened state, **characterized in that** the flap (1.2) comprises an upper wall part (1.2.1) forming a substantial part of the upper wall of the housing (1), and a rear wall part (1.2.2) forming a substantial part of the rear wall of the housing (1), and the swivel axle (1.3) extends horizontally and is situated at the lower end of the rear wall part (1.2.2).

2. A lawnmower according to claim 1, **characterized in that** the housing (1) encloses the motor and the cutting device and, in a top view, has an oblong shape.

3. A lawnmower according to one of the claims 1 to 2, **characterized in that** the guide bar comprises two legs and a traverse.

4. A lawnmower according to one of the claims 1 to 3, **characterized in that** the grass catcher (4) is arranged behind the cutting device and the motor as seen in the driving direction of the lawnmower.

5. A lawnmower according to one of the claims 1 to 4, **characterized in that** the lawnmower has a filling level indicator apparatus.

6. A lawnmower according to claim 5, **characterized in that** the filling level indicator apparatus is arranged on the upper wall part (1.2.1) of the housing and comprises a flap (104) which seals the air outlet opening (102) when the grass catcher (4) is empty and opens the same when the grass catcher (4) is filled.

7. A lawnmower according to one of the claims 1 to 6, **characterized in that** the main part extends over a third up to half the length of the housing (1), as seen in a top view.

8. A lawnmower according to one of the claims 1 to 7, **characterized in that** the housing is approximately wedge-shaped when seen in a side view.

9. A lawnmower according to one of the claims 1 to 8, **characterized in that** the main part (1.1) and the flap (1.2) of the housing (1) have circumferential edges which cooperate in a sealing manner with one another.

## Revendications

1. Tondeuse à gazon;
avec un organe de coupe tournant autour d'un axe vertical ;
avec un moteur ;
avec un carter (1)
avec un manche de guidage (2) articulé au carter (1),
avec un bac collecteur d'herbe (4) intégré dans le carter (1) ;
le carter (1) comporte une partie principale (1.1) et un couvercle rabattable (1.2) qui est articulé sur la partie principale (1.1) au moyen d'un axe de pivotement (1.3) et qui est disposé de telle sorte que, lorsqu'il est relevé, le bac collecteur d'herbe (4) peut être retiré du carter (1) par le haut ;
**caractérisée en ce que**
le couvercle rabattable (1.2) comprend une partie de paroi supérieure (1.2.1) constituant une partie substantielle de la paroi supérieure du carter (1) ainsi qu'une partie de paroi arrière (1.2.2) constituant une partie substantielle de la paroi arrière du carter (1) ;
l'axe de pivotement (1.3) est orienté horizontalement et se situe à l'extrémité inférieure de la partie de paroi arrière (1.2.2).

2. Tondeuse à gazon selon la revendication 1, **caractérisée en ce que**
le carter (1) entoure le moteur et l'organe de coupe et a, vu d'en haut, une forme allongée.

3. Tondeuse à gazon selon l'une quelconque des revendications 1 à 2,
**caractérisée en ce que**
le manche de guidage comprend deux branches ainsi qu'une traverse horizontale.

4. Tondeuse à gazon selon l'une quelconque des revendications 1 à 3, **caractérisée en ce que** le bac collecteur d'herbe (4) est disposé derrière l'organe de coupe et le moteur, vu dans le sens de passage de la tondeuse.

5. Tondeuse à gazon selon l'une quelconque des revendications 1 à 4, **caractérisée en ce que** la tondeuse comprend un indicateur du niveau de remplissage.

6. Tondeuse à gazon selon la revendication 5, **caractérisée en ce que** l'indicateur du niveau de remplissage est disposé sur la partie de paroi supérieure (1.2.1) du carter et comprend un rabat (104) qui ferme l'orifice de sortie d'air (102) lorsque le bac collecteur d'herbe (4) n'est pas rempli et qui l'ouvre lorsque le bac collecteur d'herbe (4) est rempli.

7. Tondeuse à gazon selon l'une quelconque des revendications 1 à 6, **caractérisée en ce que**, vue d'en haut, la partie principale s'étend sur un tiers jusqu'à la moitié de la longueur du carter (1).

8. Tondeuse à gazon selon l'une quelconque des revendications 1 à 7, **caractérisée en ce que**, en vue de côté, le carter est de forme à peu près aiguë.

9. Tondeuse à gazon selon l'une quelconque des revendications 1 à 8, **caractérisée en ce que** la partie principale (1.1) et le couvercle rabattable (1.2) du carter (1) comportent des rebords périphériques qui coopèrent pour assurer l'étanchéité.
